# FASCICULE DE BREVET EUROPEEN

(11) **EP 2 555 071 B1**
(45) Date de publication et mention de la délivrance du brevet: **31.08.2016**
(21) Numéro de dépôt: 12179039.8
(22) Date de dépôt: 02.08.2012
(51) Int. Cl.: G05D 1/00

(54) **SYSTÈME D'ASPIRATION COMMANDÉ À DISTANCE**
FERNGESTEUERTES ANSAUGSYSTEM
REMOTE CONTROLLED VACUUMING SYSTEM

(30) Priorité: 05.08.2011 FR 1157184
(43) Date de publication de la demande: 06.02.2013
(73) Titulaire: SEB S.A., 69130 Ecully (FR)
(72) Inventeur: Marchal, Eric, 27120 Houlbec-Cocherel (FR)
(74) Mandataire: Cémeli, Eric Philippe Laurent

(56) Documents cités:
- US-A1- 2007 272 463
- GAO XUESHAN ET AL: "Floor-cleaning robot using omni-directional wheels", INDUSTRIAL ROBOT, MCB UNIVERSITY PRESS, GB, vol. 36, 6 mars 2009 (2009-03-06), pages 157-164, XP009154452, ISSN: 0143-991X
- ARMANDO SOUSA ET AL: "Using Accelerometers To Command A Cleaning Service Robot", 14TH PORTUGUESE CONFERENCE ON ARTIFICIAL INTELLIGENCE, EPIA 2009,, 15 octobre 2009 (2009-10-15), pages 288-299, XP009154483,
- PAVIL1985: "Accelerometer Project", , 9 décembre 2009 (2009-12-09), XP002664697, Extrait de l'Internet: URL:http://www.youtube.com/watch?v=0Hlchw8 zCFs&feature=player_embedded [extrait le 2011-11-30]
- JOHANSSON D ET AL: "Omnidirectional robotic telepresence through augmented virtuality for increased situation awareness in hazardous environments", SYSTEMS, MAN AND CYBERNETICS, 2009. SMC 2009. IEEE INTERNATIONAL CONFERENCE ON, IEEE, PISCATAWAY, NJ, USA, 11 October 2009 (2009-10-11), pages 6-11, XP031575033, ISBN: 978-1-4244-2793-2

## Description

La présente invention concerne le domaine technique des aspirateurs utilisés pour le nettoyage domestique et fonctionnant par filtration des particules comprises dans un flux d'air créé, entraîné et canalisé, par ledit aspirateur, vers le dispositif de filtration dudit aspirateur.

La présente invention concerne plus particulièrement le domaine des aspirateurs utilisant des roues omnidirectionnelles et pouvant être guidés et contrôlés sans qu'il y ait de liaison physique mécanique, de type flexible, entre l'utilisateur et ledit aspirateur. Le guidage et le contrôle de l'aspirateur peuvent se faire grâce à un dispositif de commande à distance. Plus particulièrement, le dispositif de commande à distance permet ainsi à l'utilisateur de rester à une position fixe par rapport au sol tandis que l'aspirateur se déplace à l'endroit voulu par l'utilisateur.

Une autre particularité de l'aspirateur selon l'invention est le système de roues omnidirectionnelles utilisé pour que l'aspirateur puisse se déplacer de façon rapide dans toutes les directions.

Il est connu de l'art antérieur des aspirateurs pouvant être contrôlés à distance grâce à un dispositif de commande communiquant avec ledit aspirateur par des moyens de communication sans fil. Le document EP1712970 dévoile un tel dispositif, où il est revendiqué que l'aspirateur est contrôlé à distance par un dispositif de commande communiquant avec l'aspirateur par l'intermédiaire de moyens de communication sans fil. Cependant il n'est pas connu dans l'art antérieur de la technique un aspirateur combinant dans le même temps l'utilisation d'un dispositif de commande contrôlant l'aspirateur par l'intermédiaire de moyens de communication sans fil et de roues omnidirectionnelles telles qu'elles seront décrites par la suite.

Généralement la commande d'un tel aspirateur ou de sa tête d'aspiration se fait grâce à un petit levier de commande ou un ensemble de boutons intégrés sur le dispositif de commande. L'instruction de commande est relayée ensuite jusqu'à l'aspirateur par l'intermédiaire des moyens de communication sans fil, dans le cas où le contrôle de l'aspirateur se fait à distance. Le déplacement de l'aspirateur nécessite donc en premier lieu de déplacer le petit levier de commande ou d'appuyer sur les différents boutons intégrés sur le dispositif de commande.

De plus le système de roues décrit dans l'art antérieur comprend généralement un sous ensemble de roues motrices, composé généralement d'au moins deux roues, et disposées de part et d'autre de l'axe central de l'aspirateur. Ces roues sont fixes en rotation par rapport à l'axe central de l'aspirateur et le rôle de ces roues est de permettre à l'aspirateur de se mouvoir soit en avant soit en arrière. La direction de l'aspirateur est donnée par une autre roue, appelée roue directionnelle, également parallèle à l'axe central de l'aspirateur mais qui peut être commandée en rotation par rapport à l'axe central de l'aspirateur. La construction mécanique du dispositif de commande en rotation de cette roue directionnelle peut se faire suivant diverses variantes. Dans certaines variantes, on peut trouver ladite roue directionnelle perpendiculaire à l'axe central de l'aspirateur.

Pour qu'un tel aspirateur puisse se mouvoir dans toutes les directions du plan, il faut donc effectuer deux actions. Une première action consiste à faire pivoter la roue directionnelle pour donner à l'aspirateur une direction. Pour cela il faut donc faire fonctionner le dispositif permettant de donner l'angle de direction à celle-ci. La seconde action consiste à faire tourner les roues motrices permettant ainsi à l'aspirateur de se mouvoir. L'ensemble de ces deux actions permet ainsi à l'aspirateur de se mouvoir dans la direction souhaitée. Les inconvénients liés à un tel dispositif sont d'une part d'augmenter les frottements avec le sol et d'autre part de diminuer la vitesse de réaction du système.

Afin de remédier à cet inconvénient le document JP2003305671 décrit un système de roues omnidirectionnelles montées sous l'aspirateur.

Ce système de roues omnidirectionnelles a l'avantage de faire jouer à la même roue aussi bien le rôle de roue motrice que le rôle de roue directionnelle, ce qui a pour avantage de n'effectuer qu'une seule action des roues, de diminuer le frottement au sol et ainsi d'augmenter la vitesse de réaction du système.

Cependant le système proposé dans le document JP2003305671 n'est valable que pour un aspirateur autonome et n'est envisageable que dans le cadre de mouvements lents des roues omnidirectionnelles et donc de l'aspirateur.

Ceci est donc pénalisant dans la mesure où le gain en mobilité se traduit par un temps d'aspiration plus important.

On connait également le document « Foor cleaning robot using omni directionnal wheels » de Xueshan GAO qui décrit un aspirateur robot mobile qui comprend des roues omnidirectionnelles et qui peut être contrôlé à distance via une télécommande de contrôle. Les roues omnidirectionnelles sont positionnées aux sommets d'un carré et un tel système, bien que contrôlable à distance ne permet pas au robot de se déplacer rapidement.

De la même manière, un inconvénient noté dans l'art antérieur est que les aspirateurs commandés à distance sont généralement de forme sphérique et sont donc inappropriés à une aspiration dans les endroits formant un angle.

Ainsi, il est apparu le besoin d'un aspirateur commandé à distance, pouvant réagir de façon rapide aux ordres de l'utilisateur, et monté sur un système de roues permettant d'une part de donner à l'aspirateur n'importe quelle direction sur la surface d'aspiration et d'autre part de combiner les actions servant à donner la direction et le mouvement audit aspirateur. L'aspirateur doit également comprendre une tête d'aspiration montée sur ledit aspirateur et de géométrie telle que cette tête d'aspiration ait accès aux surfaces angulaires de ladite surface à nettoyer.

Afin d'atteindre cet objectif, l'invention concerne un dispositif mobile d'aspiration comprenant un aspirateur, pourvu de roues omnidirectionnelles et contrôlable à distance grâce à un dispositif de commande à distance ayant la particularité que ses roues omnidirectionnelles sont composées d'une grande roue motorisée et de roulettes montées et libres sur cette grande roue et que l'aspirateur comprend des moyens de détection conçus pour recevoir et analyser le signal du dispositif de commande à distance de sorte que un mouvement du dispositif de commande à distance effectué par l'utilisateur sera d'abord perçu comme une instruction de déplacement et pourra induire n'importe quels mouvements plan de l'aspirateur.

Selon des variantes de réalisation, le dispositif de commande à distance est une télécommande pouvant avoir des formes géométriques variées et conçue néanmoins pour pouvoir être préhensible par la main d'un utilisateur.

Selon un mode de réalisation précis, cette télécommande comprend un dispositif d'émission ou de réception d'ondes électromagnétiques de type infrarouge.

Selon un autre mode de réalisation, la télécommande comprend un dispositif d'émission ou de réception d'ondes radioélectriques.

Selon encore une autre variante de réalisation, du dispositif de commande à distance, des capteurs électroniques d'acquisition de données du mouvement sont intégrés à celui-ci.

Dans une variante de réalisation, ces capteurs sont des gyroscopes électroniques et des accéléromètres électroniques, destinés à acquérir des données du mouvement du type vitesse, accélération qui sont induites par un mouvement de l'utilisateur sur la télécommande. Selon une autre variante de réalisation l'aspirateur comporte un dispositif de réception d'ondes radioélectriques.

Dans une autre variante de réalisation, l'aspirateur comporte un dispositif d'émission d'ondes électromagnétiques.

Selon un mode de réalisation précis, le dispositif d'émission d'ondes électromagnétiques comporte au moins trois émetteurs d'ondes électromagnétiques.

Selon une autre variante de réalisation, l'aspirateur comprend un système de roues omnidirectionnelles.

Selon une autre variante de réalisation, l'aspirateur comprend au moins trois roues omnidirectionnelles, permettant à l'aspirateur de se mouvoir sur le sol dans toutes les directions.

Selon un mode particulier de réalisation, ces roues omnidirectionnelles sont commandées indépendamment les unes des autres.

Selon un autre mode de réalisation, l'aspirateur intègre une tête d'aspiration, qui dans une certaine variante peut avoir une forme triangulaire.

Dans une autre variante de réalisation, l'aspirateur peut être alimenté en courant par des accumulateurs ou par un cordon électrique relié au secteur.

Dans une autre variante de réalisation, le dispositif de commande à distance peut être alimentée en courant par des accumulateurs ou par un cordon électrique relié au secteur.

D'autres caractéristiques et avantages de la présente invention apparaîtront plus clairement à la lecture de la description détaillée qui suit de plusieurs modes de réalisation de l'invention donnés à titre d'exemple nullement limitatif et illustrés par les dessins annexés, dans lesquels:
- la figure 1 représente un dispositif mobile d'aspiration selon un premier mode de réalisation ;
- la figure 2 représente un dispositif mobile d'aspiration selon un second mode de réalisation ;
- la figure 3 représente en vue de dessus l'aspirateur de la figure 2 ;
- la figure 4 est une vue de dessus de l'aspirateur de la figure 1 ou 2 comportant trois roues omnidirectionnelles et une tête d'aspiration de forme triangulaire ;
- la figure 5 représente le schéma bloc de la télécommande dans le mode de réalisation de la figure 2.

Selon un mode de réalisation précis, un dispositif mobile d'aspiration (1) commandé à distance comprend un aspirateur (2) non limitativement de forme circulaire, commandé à distance par un dispositif de commande à distance (10).

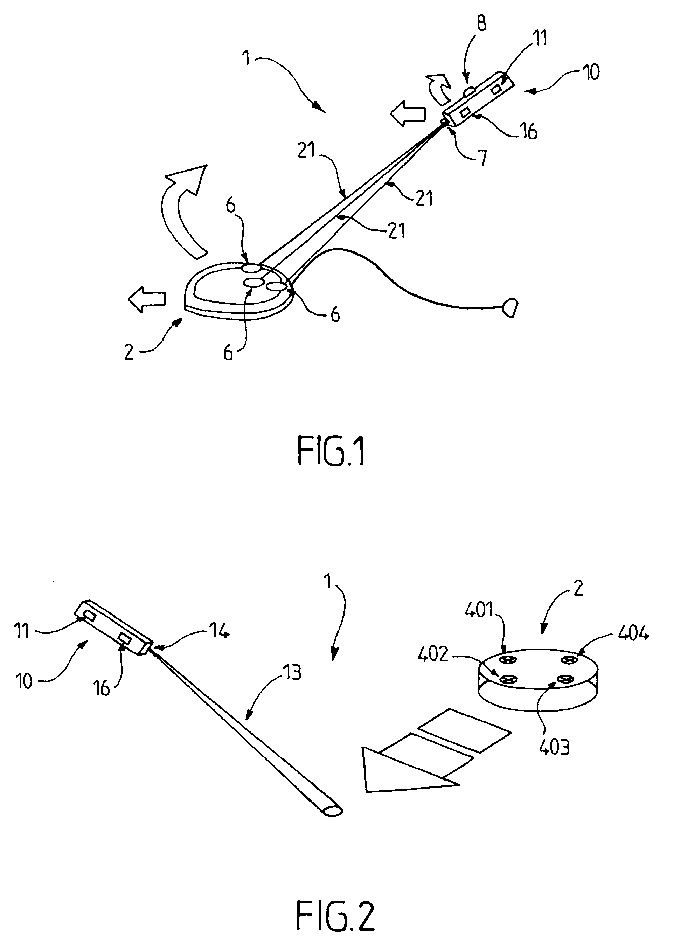

Dans un premier mode de réalisation visualisable sur la figure 1, le dispositif de commande à distance (10) comprend :
- au moins un capteur (7) d'ondes électromagnétiques, ayant une sensibilité comprise entre 780 nm et 1 000 000 nm.
- un émetteur (8) d'ondes radioélectriques émettant des ondes dont la fréquence est comprise entre 2 400 et 2 483,5 MHz.
- un système (11) d'acquisition des données du mouvement du type vitesse, accélération et composé par des capteurs gyroscopiques électroniques et des accéléromètres électroniques.
- un dispositif de traitement du signal (16)

L'aspirateur (2) comprend quant à lui au moins trois émetteurs (6) électroniques d'ondes électromagnétiques pouvant émettre des ondes électromagnétiques ayant des longueurs d'ondes comprises entre 780 et 1 000 000 nm.

Des signaux (21) sont émis par les émetteurs (6) électroniques d'ondes électromagnétiques de l'aspirateur (2) puis sont réceptionnés par le capteur (7) d'ondes électromagnétiques du dispositif de commande à distance (10), ce qui permet de positionner l'aspirateur (2) par rapport au dispositif de commande à distance (10) par une méthode qui consiste à comparer la forme des signaux (21) reçus avec une forme prédéfinie et enregistrée dans le dispositif de commande à distance (10).

Dans le mode de réalisation où l'aspirateur (2) comporte trois émetteurs (6) électroniques d'ondes électromagnétiques, les signaux (21) vus par le dispositif de commande à distance (10) formeront une image ayant une forme géométrique triangulaire et suivant la position du dispositif de commande à distance (10) par rapport à ce signal triangulaire, celui-ci sera vu plus ou moins déformé par le dispositif de commande à distance (10). Le traitement des signaux opéré dans le dispositif de commande à distance (10), par le dispositif de traitement du signal (16), consistera à comparer la forme du signal de forme triangulaire déformé reçu avec une forme triangulaire prédéfinie et fixe, puis d'apporter les corrections nécessaires au signal déformé pour retrouver la forme définie.

Le résultat de ce traitement se présente sous la forme d'impulsions électriques qui sont envoyées à l'émetteur (8) d'ondes radioélectriques du dispositif de commande à distance (10).

Un capteur (9) d'ondes radioélectriques, positionné sur l'aspirateur (2) permet ensuite de réceptionner les ondes radioélectriques contenant des instructions de déplacement.

Un des avantages apportés par cette solution est qu'il n'est pas nécessaire que les deux appareils soient en vis-à-vis direct pour que la transmission d'informations s'effectue correctement.

Les ondes radioélectriques reçues par le capteur (9) d'ondes radioélectriques de l'aspirateur (2) contiennent les instructions relatives au déplacement dudit aspirateur.

Une fois ces instructions reçues par le capteur (9) d'ondes radioélectriques de l'aspirateur (2), il est nécessaire de traiter ce signal par un dispositif de traitement du signal (5) afin de retirer de celui-ci les données relatives aux différents mouvements à effectuer.

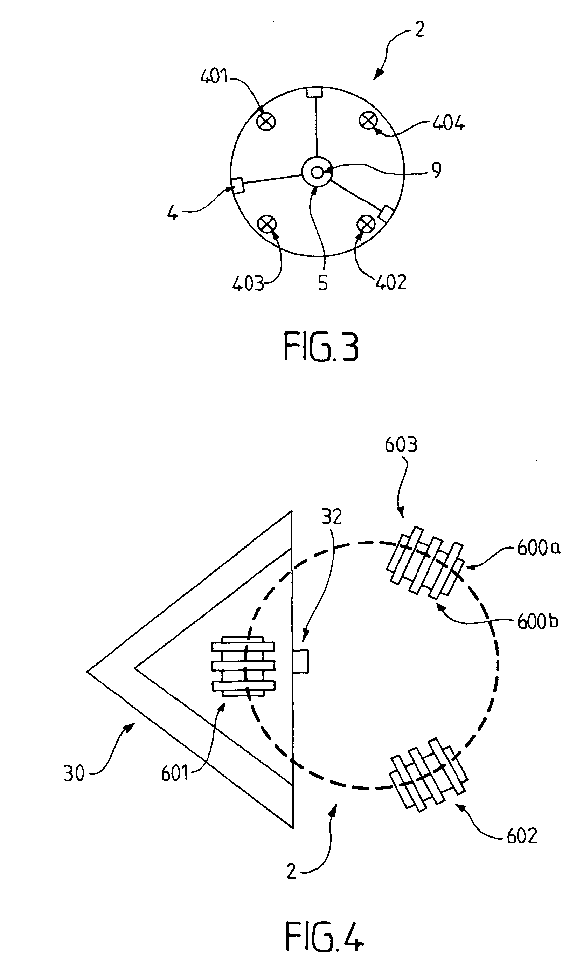

Le signal est ainsi traité par le dispositif de traitement du signal (5) et les instructions résultantes serviront ensuite à piloter des dispositifs motorisés (4) servant à actionner des roues omnidirectionnelles (601; 602; 603) visibles sur la figure 4.

Les instructions données aux moteurs seront respectivement la vitesse de rotation du moteur et le sens de rotation de celui-ci.

L'avantage du système de roues omnidirectionnelles (601; 602; 603) adoptées pour l'invention tient dans le fait que la direction et la vitesse de l'aspirateur (2) seront déterminées par la vitesse de rotation et le sens de rotation de chaque roue omnidirectionnelle.

Un mouvement du dispositif de commande à distance (10) sera donc interprété par l'aspirateur (2) comme une instruction de déplacement.

Dans un autre mode de réalisation, visualisable sur la figure 2, le dispositif de commande à distance (10) comporte un émetteur (14) électronique d'ondes électromagnétiques permettant d'émettre un signal (13) constitué par des ondes électromagnétiques ayant une longueur d'onde comprise dans l'infrarouge, c'est-à-dire de longueur d'onde comprise entre 780 nm et 1 000 000 nm. Dans ce mode de réalisation, l'intensité du signal (13) sera perçue de façon différente par des capteurs (401, 402, 403, 404) électroniques d'ondes électromagnétiques, suivant l'orientation qu'aura le dispositif de commande à distance (10). De plus les capteurs (401, 402, 403, 404) électroniques d'ondes électromagnétiques sont positionnés de façon stratégique sur l'aspirateur (2) afin de permettre un positionnement le plus précis possible de l'aspirateur (2) par rapport au point de contact du signal (13) sur une surface faisant obstacle audit signal (13).

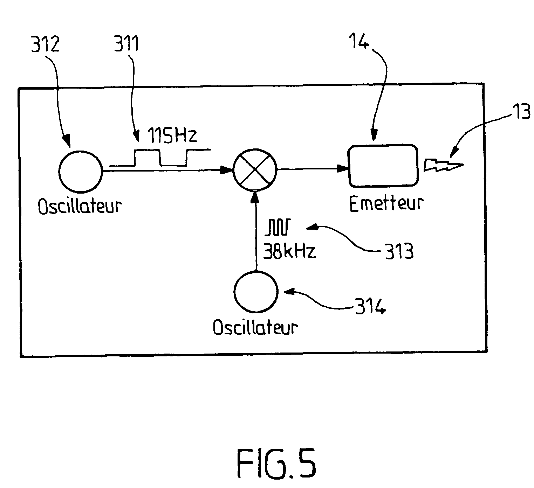

Le signal (13) émis par l'émetteur (14) électronique d'ondes électromagnétiques du dispositif de commande à distance (10) est constitué, comme indiqué sur la figure 5, d'un signal carré (311) qui est, dans ce mode de réalisation, émis à une fréquence de 115Hz par un premier oscillateur (312). Ce signal carré (311) est modulé par un signal porteur (313) de 38kHz modulé par un second oscillateur (314).

Dans le cas du positionnement stratégique des capteurs (401, 402, 403, 404) électroniques d'ondes électromagnétiques, les capteurs doivent être positionnés de la manière indiquée sur la figure 3. Le premier capteur (401) électronique d'ondes électromagnétiques doit être positionné à l'avant de l'aspirateur. Le deuxième capteur (402) électronique d'ondes électromagnétiques doit être positionné sur la partie arrière de l'aspirateur. Les deux autres capteurs (403, 404) électroniques d'ondes électromagnétiques doivent être positionnés respectivement à gauche et à droite de l'aspirateur (2).

Une tête d'aspiration (30) est positionnée sur l'aspirateur (2). Elle a pour but de créer un canal d'aspiration par lequel les éléments à aspirer passeront.

Selon diverses variantes, une jonction (32) de la tête d'aspiration (30) avec l'aspirateur (2) peut être flexible ou rigide.

La tête d'aspiration (30) peut avoir une forme non limitativement triangulaire comme visible sur la figure 4.

Dans les deux modes de réalisation précédemment cités, le système de roues (601, 602, 603) est composé de trois roues omnidirectionnelles. Chaque roue (601, 602, 603) de ce système occupe le sommet d'un triangle équilatéral. Ainsi, comme c'est le cas sur la figure 3, la première roue (601) est positionnée sur l'aspirateur (2) au niveau de la tête d'aspiration (30). La seconde roue (602) est ensuite positionnée sur l'aspirateur (2) suivant un angle de 120° par rapport à la première roue (601). La troisième roue (603) prend également place sur l'aspirateur (2) suivant un angle de 120° par rapport à la seconde roue (602).

Les différents modes de réalisation précédemment cités présentent le même système de trois roues omnidirectionnelles (601, 602, 603). Mais dans diverses variantes il peut y avoir plus de trois roues omnidirectionnelles.

La particularité de ces roues omnidirectionnelles (601, 602, 603) est d'être constituées d'une grande roue (600a) et de roulettes (600b) positionnées sur ladite grande roue (600a). La grande roue (600a) est motorisée. Les roulettes (600b) sont libres et permettent simplement de réduire les frottements avec le sol lorsque la grande roue (600a) n'est pas orientée dans le sens du déplacement.

Ainsi lorsque l'aspirateur (2) est composé de trois roues omnidirectionnelles (601, 602, 603), pour faire un déplacement de la gauche vers la droite dans le plan de la feuille, il faut faire tourner les deux roues (602, 603) vers le déplacement, et bloquer la roue (601). Les roulettes (600b) de la roue (601) sont donc orientées vers le déplacement et réduisent les frottements avec le sol.

Selon différentes variantes de réalisation, les roues (601; 602; 603) peuvent être positionnées soit en dessous de l'aspirateur (2), soit sur le côté dudit aspirateur (2).

Dans le cas où le dispositif de commande à distance (10) est conforme au premier mode de réalisation, le fonctionnement du dispositif mobile d'aspiration (1) peut être vu comme ceci : l'utilisateur tient dans sa main le dispositif de commande à distance (10). L'utilisateur en déplaçant son bras tenant le dispositif de commande à distance (10) va automatiquement associer un mouvement au dispositif de commande à distance (10). Le capteur (7) d'ondes électromagnétiques du dispositif de commande à distance (10) va alors récupérer les signaux (21) émis par les émetteurs (6) électroniques d'ondes électromagnétiques de l'aspirateur (2). Dans le même temps, des données du mouvement du dispositif de commande à distance (10) ont pu être acquises par le système (11) d'acquisition des données du mouvement du dispositif de commande à distance (10) lors du déplacement par l'utilisateur. Ces données du mouvement acquises et les signaux (21) reçus de l'aspirateur (2) vont être reçus en entrée du dispositif de traitement du signal (16). Le traitement de l'ensemble de ces données va permettre de renseigner sur la position de l'aspirateur (2) par rapport au dispositif de commande à distance (10). Ainsi en sortie du dispositif de traitement du signal (16), on va récupérer des impulsions électriques qui sont en réalité des instructions de déplacement de l'aspirateur (2). Ces impulsions électriques comprenant les instructions de déplacement seront ensuite converties en un signal composé d'ondes radioélectriques via l'émetteur (8) d'ondes radioélectriques du dispositif de commande à distance (10).

Le capteur d'ondes radioélectriques (9), positionné sur l'aspirateur (2) permet ensuite de réceptionner les ondes radioélectriques contenant des instructions de déplacement émises via l'émetteur (8) d'ondes radioélectriques du dispositif de commande à distance (10). Ces ondes radioélectriques contiennent les instructions de déplacement de l'aspirateur (2).

Le capteur (9) d'ondes radioélectriques, positionné sur l'aspirateur (2) permet ensuite de fournir à sa sortie un signal sous forme d'impulsions électriques.

Le dispositif de traitement du signal (5) intégré à l'aspirateur (2) et relié aux différents capteurs (9) d'ondes radioélectriques permet à partir des impulsions électriques provenant des différents capteurs (9) d'ondes radioélectriques de convertir ces impulsions en instructions lisibles au pilotage des moteurs.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif mobile d'aspiration (1) comprenant d'une part un aspirateur (2) contrôlable à distance et pourvu de roues omnidirectionnelles (601, 602, 603), et d'autre part un dispositif de commande à distance (10) de l'aspirateur (2) et l'aspirateur (2) comprend des moyens de détection (9, 401, 402, 403, 404) conçus pour recevoir et analyser un signal du dispositif de commande à distance (10) **caractérisé en ce que** :
- le dispositif de commande à distance (10) comprend un système (11) d'acquisition de données du mouvement afin d'acquérir des données de mouvement lors d'un mouvement du dispositif de commande à distance (10) et le signal émis par le dispositif de commande à distance (10) intègre des instructions de déplacement qui seront ensuite reçues par l'aspirateur (2),
- trois roues omnidirectionnelles (601, 602, 603) positionnées aux sommets d'un triangle équilatéral composées d'une grande roue (600a) motorisée et de roulettes (600b) montées et libres sur cette grande roue (600a), et les trois roues omnidirectionnelles permettent à l'aspirateur (2) après réception du signal de se déplacer rapidement dans n'importe quelle direction du plan.

2. Dispositif mobile d'aspiration (1) selon la revendication 1, **caractérisé en ce que** le dispositif de commande à distance (10) est une télécommande pouvant avoir des formes géométriques variées et conçue pour être préhensible par la main d'un utilisateur.

3. Dispositif mobile d'aspiration (1) selon la revendication précédente, **caractérisé en ce que** la télécommande (10) est équipée d'un dispositif de réception ou d'émission d'ondes électromagnétiques.

4. Dispositif mobile d'aspiration (1) selon l'une des revendications 2 ou 3, **caractérisé en ce que** la télécommande (10) comporte un dispositif d'émission (8) ou de réception d'ondes radioélectriques.

5. Dispositif mobile d'aspiration (1) selon l'une des revendications précédentes, **caractérisé en ce que** ce système (11) d'acquisition de données du mouvement est composé de capteurs gyroscopiques et accélérométriques destinés à acquérir des données du mouvement du type vitesse et accélération qui sont induites par un mouvement de l'utilisateur sur le dispositif de commande à distance (10).

6. Dispositif mobile d'aspiration (1) selon la revendication 1, **caractérisé en ce que** l'aspirateur (2) comporte un dispositif de réception d'ondes radioélectriques (8).

7. Dispositif mobile d'aspiration (1) selon la revendication 1, **caractérisé en ce que** l'aspirateur (2) comporte un dispositif d'émission d'ondes électromagnétiques (6).

8. Dispositif mobile d'aspiration (1) selon la revendication précédente, **caractérisé en ce que** ce dispositif d'émission d'ondes électromagnétiques (6) est composé d'au moins trois émetteurs d'ondes électromagnétiques.

9. Dispositif mobile d'aspiration (1) selon la revendication 1, **caractérisé en ce que** ces roues omnidirectionnelles (601 ; 602 ; 603) sont commandées indépendamment les unes des autres.

10. Dispositif mobile d'aspiration (1) selon la revendication 1, **caractérisé en ce que** l'aspirateur (2) intègre une tête d'aspiration, qui dans une certaine variante, peut avoir une forme triangulaire.

11. Dispositif mobile d'aspiration (1) selon la revendication 1, **caractérisé en ce que** l'alimentation de l'aspirateur (2) peut se faire grâce à des accumulateurs ou grâce à un cordon électrique relié au secteur.

12. Dispositif mobile d'aspiration (1) selon la revendication 1, **caractérisé en ce que** l'alimentation du dispositif de commande à distance (10) de l'aspirateur (2) peut se faire grâce à des accumulateurs intégrés audit dispositif (10) ou grâce à un cordon électrique relié au secteur.

## Patentansprüche

1. Mobile Vorrichtung zum Saugen (1), einerseits bestehend aus einem Staubsauger (2), der ferngesteuert werden kann und mit omnidirektionalen Rädern (601, 602, 603) ausgestattet ist, und andererseits bestehend aus einer Fernsteuerungsvorrichtung (10) des Staubsaugers (2), wobei der Staubsauger (2) über Mittel zur Erfassung (9, 401, 402, 403, 404) verfügt, die zum Empfangen und Entschlüsseln eines Signals der Fernsteuerungsvorrichtung (10) konzipiert sind, **dadurch gekennzeichnet, dass**:
- die Fernsteuerungsvorrichtung (10) ein System (11) zum Sammeln von Bewegungsdaten umfasst, um bei einer Bewegung der Fernsteuerungsvorrichtung (10) Bewegungsdaten zu sammeln, und das gesendete Signal der Fernsteuerungsvorrichtung (10) Bewegungsinstruktionen enthält, die der Staubsauger (2) empfängt,
- sie drei omnidirektionale Räder (601, 602, 603) aufweist, die an den Spitzen eines gleichseitigen Dreiecks angebracht sind, wobei das Dreieck aus einem großen Rad (600a) mit Motorantrieb und Laufrollen (600b), die an diesem großen Rad (600a) angebracht und freilaufend gelagert sind, besteht, und dass sie drei omnidirektionale Räder aufweist, dank denen sich der Staubsauger (2) nach dem Empfang eines Signals schnell in jede Richtung der Ebene bewegen kann.

2. Mobile Vorrichtung zum Saugen (1) nach Anspruch 1, **dadurch gekennzeichnet, dass** die Fernsteuerungsvorrichtung (10) eine Fernbedienung ist, die verschiedene geometrische Formen aufweisen kann und dafür ausgelegt ist, vom Nutzer mit der Hand gegriffen zu werden.

3. Mobile Vorrichtung zum Saugen (1) nach dem vorhergehenden Anspruch, **dadurch gekennzeichnet, dass** die Fernbedienung (10) mit einer Vorrichtung zum Empfangen und Senden elektromagnetischer Wellen ausgestattet ist.

4. Mobile Vorrichtung zum Saugen (1) nach einem der Ansprüche 2 oder 3, **dadurch gekennzeichnet, dass** die Fernbedienung (10) eine Vorrichtung zum Senden (8) oder Empfangen von Funkwellen umfasst.

5. Mobile Vorrichtung zum Saugen (1) nach einem der vorhergehenden Ansprüche, **dadurch gekennzeichnet, dass** dieses System (11) zum Sammeln von Bewegungsdaten aus Kreisel- und Beschleunigungssensoren besteht, die dazu bestimmt sind, Bewegungsdaten wie Geschwindigkeit und Beschleunigung zu sammeln, die bei einer Bewegung der Fernsteuerungsvorrichtung (10) durch den Nutzer ausgelöst werden.

6. Mobile Vorrichtung zum Saugen (1) nach Anspruch 1, **dadurch gekennzeichnet, dass** der Staubsauger (2) eine Vorrichtung zum Empfangen von Funkwellen (8) umfasst.

7. Mobile Vorrichtung zum Saugen (1) nach Anspruch 1, **dadurch gekennzeichnet, dass** der Staubsauger (2) eine Vorrichtung zum Senden elektromagnetischer Wellen (6) umfasst.

8. Mobile Vorrichtung zum Saugen (1) nach dem vorhergehenden Anspruch, **dadurch gekennzeichnet, dass** die Vorrichtung zum Senden von elektromagnetischen Wellen (6) aus mindestens drei Sendern elektromagnetischer Wellen besteht.

9. Mobile Vorrichtung zum Saugen (1) nach Anspruch 1, **dadurch gekennzeichnet, dass** die omnidirektionalen Räder (601, 602, 603) unabhängig voneinander gesteuert werden.

10. Mobile Vorrichtung zum Saugen (1) nach Anspruch 1, **dadurch gekennzeichnet, dass** der Staubsauger (2) über einen Saugkopf verfügt, der in einer bestimmten Ausführung eine dreieckige Form aufweisen kann.

11. Mobile Vorrichtung zum Saugen (1) nach Anspruch 1, **dadurch gekennzeichnet, dass** die Stromversorgung des Staubsaugers (2) über Batterien oder über ein an das Stromnetz angeschlossenes Netzkabel erfolgen kann.

12. Mobile Vorrichtung zum Saugen (1) nach Anspruch 1, **dadurch gekennzeichnet, dass** die Stromversorgung der Fernsteuerungsvorrichtung (10) des Staubsaugers (2) über in diese Vorrichtung integrierte Batterien (10) oder über ein an das Stromnetz angeschlossenes Netzkabel erfolgen kann.

## Claims

1. Mobile suction device (1) comprising firstly a remotely controllable vacuum cleaner (2) and provided with omnidirectional wheels (601, 602, 603), and secondly a device (10) for remotely controlling the vacuum cleaner (2), and the vacuum cleaner (2) comprises detection means (9, 401, 402, 403, 404) designed to receive and analyse a signal from the remote control device (10), **characterised in that**:
- the remote control device (10) comprises a movement data acquisition system (11) in order to acquire movement data when the remote control device (10) moves and the signal transmitted by the remote control device (10) includes displacement instructions which will then be received by the vacuum cleaner (2),
- three omnidirectional wheels (601; 602; 603) positioned at the vertices of an equilateral triangle composed of a large motorised wheel (600a) and casters (600b) mounted and free on this large wheel (600a), and the three omnidirectional wheels allow the vacuum cleaner (2), after receiving the signal, to move rapidly in any direction of the plane.

2. Mobile suction device (1) according to claim 1, **characterised in that** the remote control device (10) is a remote control which can have various geometrical shapes and is designed to be gripped by the hand of a user.

3. Mobile suction device (1) according to the preceding claim, **characterised in that** the remote control (10) is equipped with a device for receiving or transmitting electromagnetic waves.

4. Mobile suction device (1) according to claim 2 or 3, **characterised in that** the remote control (10) includes a device (8) for transmitting or receiving radioelectric waves.

5. Mobile suction device (1) according to one of the preceding claims, **characterised in that** this movement data acquisition system (11) is composed of gyroscopic and accelerometric sensors intended to acquire movement data such as speed and acceleration data which are induced by a movement of the user on the remote control device (10).

6. Mobile suction device (1) according to claim 1, **characterised in that** the vacuum cleaner (2) includes a device (8) for receiving radioelectric waves.

7. Mobile suction device (1) according to claim 1, **characterised in that** the vacuum cleaner (2) includes a device (6) for transmitting electromagnetic waves.

8. Mobile suction device (1) according to the preceding claim, **characterised in that** this device (6) for transmitting electromagnetic waves is composed of at least three electromagnetic wave transmitters.

9. Mobile suction device (1) according to claim 1, **characterised in that** these omnidirectional wheels (601; 602; 603) are controlled independently of each other.

10. Mobile suction device (1) according to claim 1, **characterised in that** the vacuum cleaner (2) includes a suction head, which in a certain variant, may have a triangular shape.

11. Mobile suction device (1) according to claim 1, **characterised in that** the power supply of the vacuum cleaner (2) can be provided by accumulators or by an electrical cord connected to the mains.

12. Mobile suction device (1) according to claim 1, **characterised in that** the power supply of the remote control device (10) of the vacuum cleaner (2) can be provided by accumulators integrated in said device (10) or by an electrical cord connected to the mains.
